# EUROPÄISCHE PATENTSCHRIFT

(11) **EP 1 001 186 B1**
(45) Veröffentlichungstag und Bekanntmachung des Hinweises auf die Patenterteilung: **15.01.2003**
(21) Anmeldenummer: 99121765.4
(22) Anmeldetag: 13.06.1996
(51) Int. Cl.: F16H 19/00, F16H 21/10, H02K 7/116

(54) **Vorrichtung zum Bewegen von Schweissbacken**
Apparatus for moving sealing jaws
Appareil pour déplacer des machoires de scellement

(30) Priorität: 23.09.1995 DE 19535438
(43) Veröffentlichungstag der Anmeldung: 17.05.2000
(62) Teilanmeldung aus: 96109481.0
(73) Patentinhaber: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 324 155
- EP-A- 0 347 716
- EP-A- 0 368 016
- DD-A- 202 468
- DE-A- 1 942 023
- FR-A- 2 592 820
- GB-A- 2 184 381
- US-A- 2 859 630
- US-A- 3 731 166
- US-A- 3 986 405
- US-A- 4 017 001
- US-A- 4 906 082
- US-A- 5 099 708
- US-A- 5 153 494
- US-A- 5 203 145
- PASSEHL R: "Involute Bell Crank" IBM TECHNICAL DISCLOSURE BULLETIN., Bd. 27, Nr. 4a, Seiten 2192-2193, XP002136489 IBM CORP. NEW YORK., US ISSN: 0018-8689

## Beschreibung

Die Erfindung betrifft eine Vorrichtung zum Bewegen mindestens eines Bauteils oder eines sonstigen Gegenstandes, bestehend aus einem Antrieb und einem über eine Verbindung mit dem Bauteil oder Gegenstand verbundenen oder verbindbaren Getriebe, und einer weiteren Verbindung zwischen dem Getriebe und dem Antrieb.

Vorrichtungen dieser Art sind hinlänglich und in vielfältigen Ausgestaltungen bekannt. Für sehr schnelle Bewegungen werden Getriebe mit großen Übersetzungen eingesetzt.

Die bekannten Vorrichtungen, z.B. Elektromotore mit Übersetzungsgetriebe haben den Nachteil, daß sie für extreme Beschleunigungen, insbesondere für Hochleistungsverpackungsmaschinen nicht geeignet sind, da eine Übersetzung zu einem zusätzlichen, zu überwindenden Trägheitsmoment während eines Beschleunigungsvorganges führt. Elektromagnetische Linearantriebe, sogenannte Linearmotoren mit entsprechend hoher Leistung sind zwar für extreme Beschleunigungen geeignet, sind aber sehr teuer, und können somit für eine große, schnelle Kraftaufbringung nicht kostengünstig eingesetzt werden. Zudem sind sie relativ groß und eignen sich daher nicht für einen kompakten Maschinenaufbau.

Dokument EP-A-0 368 016 offenbart eine Vorrichtung nach dem Oberbegriff des Anspruchs 1.

Der Erfindung liegt die Aufgabe zu Grunde, eine Vorrichtung zum Bewegen mindestens eines Bauteils oder eines sonstigen Gegenstandes zu finden, derart, daß extrem große Beschleunigungswerte kostengünstig und mittels eines relativ kompakten Antriebs realisiert werden können.

Gelöst ist die Aufgabe gemäß Anspruch 1. Danach ist der Antrieb ein elektromagnetischer Linearantrieb mit einem beweglichen und einem antreibenden Teil, und das Getriebe ist ein Untersetzungsgetriebe.

Die Erfindung hat den Vorteil, daß mit dem elektromagnetischen Unearantrieb extrem große Beschleunigungen bis zum Zwanzigfachen der Erdbeschleunigung realisiert werden können. Infolge des Untersetzungsgetriebes wird diese Beschleunigung zwar um das Untersetzungsverhältnis, was z.B. Werte um Zwei haben kann, reduziert, die Beschleunigung ist aber immer noch extrem groß. Für eine bestimmte aufzuwendende Kraft kann wegen der Untersetzung ein Linearantrieb mit relativ kleiner Leistung eingesetzt werden. Da die Kosten für einen Linearantrieb bei höherer Leistung überproportional zunehmen, ist mittels eines Linearantriebs mit vergleichsweise geringer Leistung eine kostengünstige Lösung erreicht. Zudem hat ein derartiger Linearantrieb relativ geringe Abmessungen und ist somit kompakt in eine Maschine einbaubar.

Weitere vorteilhafte Ausgestaltungen der erfindungsgemäßen Vorrichtung sind in den Ansprüchen 2 bis 13 beschrieben.

Ist das antreibende Teil relativ zum Bauteil bzw. Gegenstand ortsfest (Anspruch 2), so können alle Bewegungen relativ zum antreibenden Teil, der starr und ortsfest oder ortsveränderbar mit dem Rahmen einer Maschinen verbunden ist, erfolgen.

Ein Getriebe analog Anspruch 3 hat den Vorteil, daß es einfach und kostengünstig realisierbar ist, sowie daß es für große Beschleunigungen sehr geeignet ist. Das Untersetzungsverhältnis wird durch das Verhältnis der unterschiedlichen Durchmesser der Scheiben bestimmt und kann durch Scheibenaustausch schnell und in einfacher Weise verändert werden.

Ein sehr einfaches und robustes Getriebe ist analog Anspruch 4 realisierbar. Hierbei ist das bewegliche Teil senkrecht zu einer Führung bewegbar, ist entlang der Führung ein Bauteil verschiebbar, und ist das bewegliche Teil über einen Gelenkmechanismus mit dem Bauteil verbunden. Das bewegliche Teil wird ortsgenau geführt, und die zu überwindenden Trägheitskräfte sind minimiert. Beträgt bei diesem Getriebe in einer Startposition für einen Beschleunigungsvorgang der Winkel zwischen dem Gelenkmechanismus und der Führung maximal 60 Grad (Anspruch 5), so erfolgt der Start des Beschleunigungsvorganges bei einem günstigen Winkel, bei dem eine relativ große Kraftkomponente in Richtung der Führung wirkt.

Das Getriebe nach Anspruch 3 ist mit minimierter Reibung ausgeführt, wenn gemäß Anspruch 6 die Mitnehmereinrichtung eine umlaufende Fläche ist, und wenn achsparallel versetzt identisch zwei weitere, miteinander verbundene Scheiben vorgesehen sind, wobei ein Riemen um die kleinen Scheiben und ein weiterer Riemen um die größeren Scheiben umläuft. Um einen Schlupf zwischen dem Riemen und einer umlaufenden Fläche zu verhindern, können analog Anspruch 7 die umlaufende Fläche eine gezahnte Fläche eines Zahnrades und der Riemen ein Zahnriemen sein.

Eine weitere, robuste Getriebeausgestaltung ist bei einem Scherengetriebe erreicht. Nach Anspruch 8 enthält dieses Getriebe zwei eine Schere bildende Scherenbecks. Entlang einer Führung verschiebbare Bauteile sind über Gelenke mit den Scherenspitzen verbunden. Das bewegliche Teil des elektromagnetischen Linearantriebs wirkt gegen die Scherenenden und spreizt oder schließt derart die Schere. Beim Schließen der Schere werden die Bauteile aufeinander zu bewegt, beim Öffnen der Schere werden die Bauteile entlang der Führung voneinander weg bewegt Je nach baulicher Gegebenheit kann das bewegliche Teil senkrecht (Anspruch 9) oder parallel (Anspruch 10) zur Führung bewegbar in der Vorrichtung eingebaut sein. Bei einem Einbau senkrecht zur Führung kann das bewegliche Teil über ein Gelenk und jeweils eine Strebe mit den Scherenenden verbunden werden (Anspruch 9). Bei dieser Lösung ist der Unearantrieb ortsfest. Die Streben und die Scherenbecks übertragen die Kraft des Linearantriebs auch über eine größere Strecke, sowohl senkrecht zur Führung, als auch entlang der Führung. Bei einem Einbau des beweglichen Teils bzw. des Linearantriebs parallel zur Führung können die Scherenbecks in etwa mittig über ein Gelenk miteinander verbunden sein, und ein Scherenbeck kann über ein Gelenk mit dem antreibenden Teil verbunden sein (Anspruch 10).

Dieser Mechanismus ist insbesondere für die Übertragung großer Kräfte für kleine Auslenkungen der Bauteile geeignet Das Untersetzungsverhältnis wird hierbei durch die als Hebel fungierenden Scherenbecks bestimmt. Die genaue Lage des in etwa mittig angeordneten Gelenks bestimmt das Verhältnis von Lastarm zu Kraftarm eines Scherenbecks und damit das Untersetzungsverhältnis. Prinzipiell kann das Untersetzungsverhältnis an einem Scherenbeck durch eine Verstellung eines Gelenks entlang eines Scherenbecks erreicht werden (Anspruch 11).

Eine Querschweißeinrichtung einer Schlauchbeutelmaschine ist dadurch erreichbar, daß analog Anspruch 12 jeweils eine Schweißbacke über eine Befestigung mit dem Getriebe verbunden ist. Der Linearantrieb bewirkt durch eine Hin- und Herbewegung des beweglichen Teils eine Relativbewegung der Schweißbacken aufeinander zu und voneinander weg, wodurch eine Querverschweißung eines Folienschlauchs erfolgt.

Ist die Vorrichtung als Höhenverstellvorrichtung ausgeführt (Anspruch 13), so kann ein gesamter Querbackenstock einer Querschweißeinrichtung mitsamt dessen Linearantrieb vertikal mittels eines Linearantriebs der Höhenverstellvorrichtung verschoben werden. Durch aufeinander abgestimmte Bewegungen der beiden Linearantriebe ist eine quasi unendlich große Vielfalt an Bahnkurven der Schweißbacken erreichbar.

Im folgenden wird die Erfindung anhand von Ausführungsbeispiele schematisch darstellenden Figuren näher beschrieben. Es zeigt:
- Figur 1: in einer Seitenansicht ein Getriebe für Schweißbacken mit einerseits einem elektromagnetischen Linearantrieb in einer eine Untersetzung realisierenden Position und andererseits als Alternative (gestrichelt gezeichnet) in einer Position, bei der keine Untersetzung erreicht ist, sowie mit zwei auf ein kleines Zahnrad wirkenden Zahnstangen und einer auf ein größeres Zahnrad wirkenden Zahnstange;
- Figur 2: in einer Seitenansicht ein Getriebe für Schweißbacken mit zweimal zwei starr miteinander verbundenen, unterschiedlich großen Scheiben, wobei einerseits um die kleinen Scheiben und andererseits um die großen Scheiben jeweils ein Riemen umläuft;
- Figur 3: in einer Seitenansicht einen Getriebeaufbau analog Figur 2, jedoch in einer Ausgestaltung als Höhenverstelleinrichtung;
- Figur 4: in einer Seitenansicht ein senkrecht zu einer Führung bewegliches Teil eines elektromagnetischen Linearantriebs, das über einen Gelenkmechanismus zwei Bauteile entlang der Führung und gegeneinander verschiebt;
- Figur 5: in einer Seitenansicht ein Getriebe mit einem Scherenmechanismus zur Verschiebung von zwei Bauteilen entlang einer Führung und mit einem senkrecht zur Führung beweglichen Teil des elektromagnetischen Linearantriebs;
- Figur 6: in einer Seitenansicht ein weiteres Getriebe mit einem Scherenmechanismus, bei dem das bewegliche Teil parallel zur Führung ausgelenkt ist.

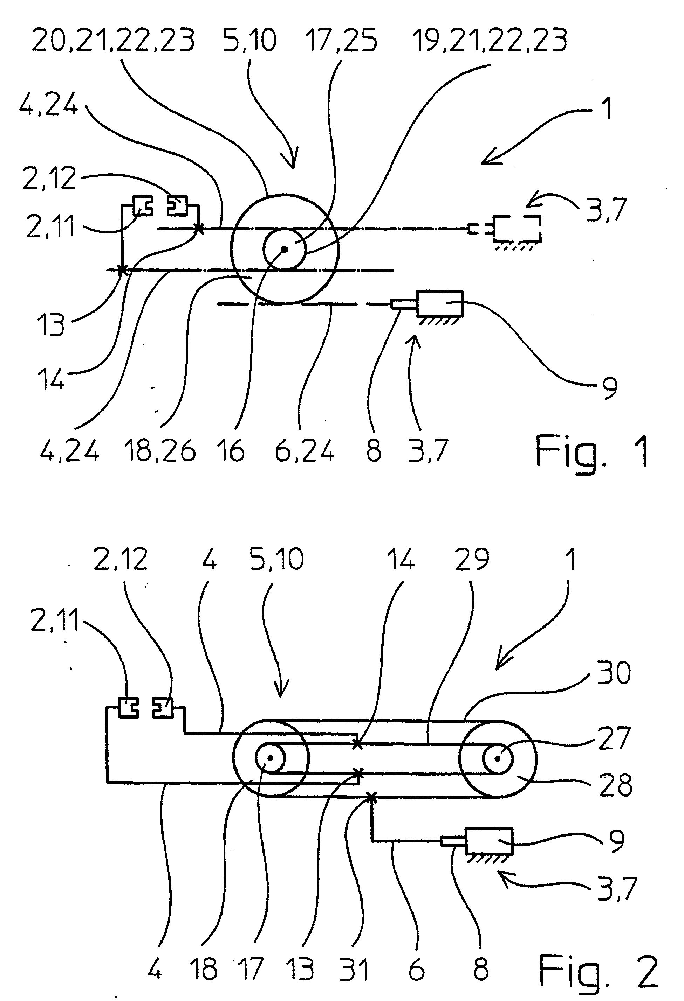

Bei einer Vorrichtung 1 zum Bewegen mindestens eines Bauteils 2, bestehend aus einem Antrieb 3 und einem jeweils über eine Verbindung 4 mit einem Bauteil 2 verbundenen Getriebe 5, sowie einer weiteren Verbindung 6 zwischen dem Getriebe 5 und dem Antrieb 3 ist der Antrieb 3 ein elektromagnetischer Unearantrieb 7 mit einem beweglichen Teil 8 und einem antreibenden Teil 9, und das Getriebe 5 ist ein Untersetzungsgetriebe 10 (Figur 1). Das antreibende Teil 9 ist relativ zu den bewegten Bauteilen 2 ortsfest. Es sind zwei Bauteile 2 vorgesehen, die als Schweißbacken 11, 12 über jeweils eine Befestigung 13, 14 mit dem Getriebe 5 verbunden sind. Der Linearantrieb 7 treibt das Getriebe 5 in einer Untersetzung an, wobei er in einer (gestrichelt eingezeichneten) Position prinzipiell auch ohne Untersetzung verwendet werden könnte. Das Getriebe 5 enthält zwei um die gleiche Achse 16 drehbare, starr miteinander verbundene Scheiben 17, 18 mit unterschiedlichen Durchmessern. Jede Scheibe 17, 18 weist entlang ihres Mantels 19, 20 eine Mitnehmereinrichtung 21 in Form einer als gezahnte Fläche 22 umlaufenden Fläche 23 auf. Die gezahnte Fläche 22 nimmt als Verbindungen 4, 6 dienende Zahnstangen 24 auf. Die Mitnehmereinrichtung 21 der Scheibe 18 mit dem größeren Durchmesser hat Kontakt mit der Verbindung 6 zum Antrieb 3, und die Mitnehmereinrichtung 21 der Scheibe 17 mit dem kleineren Durchmesser hat Kontakt mit den Verbindungen 4 zu den Bauteilen 2. Das Verhältnis der Radien der Scheiben 17, 18 ist das Untersetzungsverhältnis. Es ermöglicht es, einen relativ leistungsarmen und dadurch kostengünstig Unearantrieb 7 mit ausreichender Kraftausbringung einzusetzen. Die Beschleunigung der Schweißbacken 11, 12 ist trotz der Untersetzung noch extrem groß. Die Scheiben 17, 18 sind Zahnräder 25, 26.

Bei dem Getriebe 5 der Figur 2 sind, achsparallel zu den Scheiben 17, 18 versetzt, identisch zwei weitere, starr miteinander verbundene Scheiben 27, 28 vorgesehen. Ein glatter Riemen 29 läuft um die kleinen Scheiben 17, 27 und ein weiterer glatter Riemen 30 läuft um die großen Scheiben 18, 28 um. Die starren Verbindungen 4 sind an den Befestigungen 13, 14 mit dem umlaufenden Riemen 29 verbunden. Die starre Verbindung 6 verbindet das bewegliche Teil 8 des Linearantriebs 7 über die Befestigung 31 mit dem umlaufenden Riemen 30.

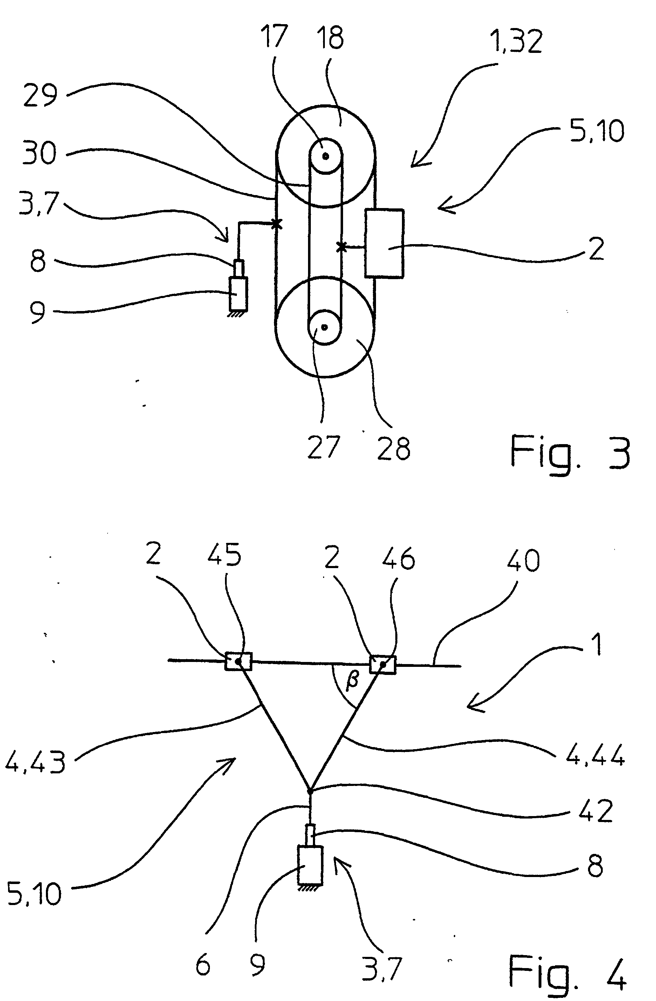

Beim Ausführungsbeispiel der Figur 3 ist die Vorrichtung 1 als Höhenverstellvorrichtung 32 ausgeführt. Das Getriebe 5 ist analog dem Getriebe 5 der Figur 2 ausgestaltet. Die Höhe eines Bauteils 2 wird mittels eines vertikal ausgerichteten elektromagnetischen Linearantriebs 7 verstellt.

Beim Ausführungsbeispiel der Figur 4 ist das bewegliche Teil 8 eines elektromagnetischen Linearantriebs 7 senkrecht zu einer Führung 40 bewegbar. Entlang der Führung 40 sind zwei Bauteile 2 gegenläufig zueinander verschiebbar. Das bewegliche Teil 8 ist über einen Gelenkmechanismus 41 mit den Bauteilen 2 verbunden. Der Gelenkmechanismus 41 besteht aus einem Gelenk 42, das die Streben 43, 44 mit Gelenken 45, 46 an den Bauteilen 2 verbindet. Insbesondere für kleine Winkel β zwischen der Führung 40 und den Streben 43, 44 sind günstige Kraftübertragungen möglich.

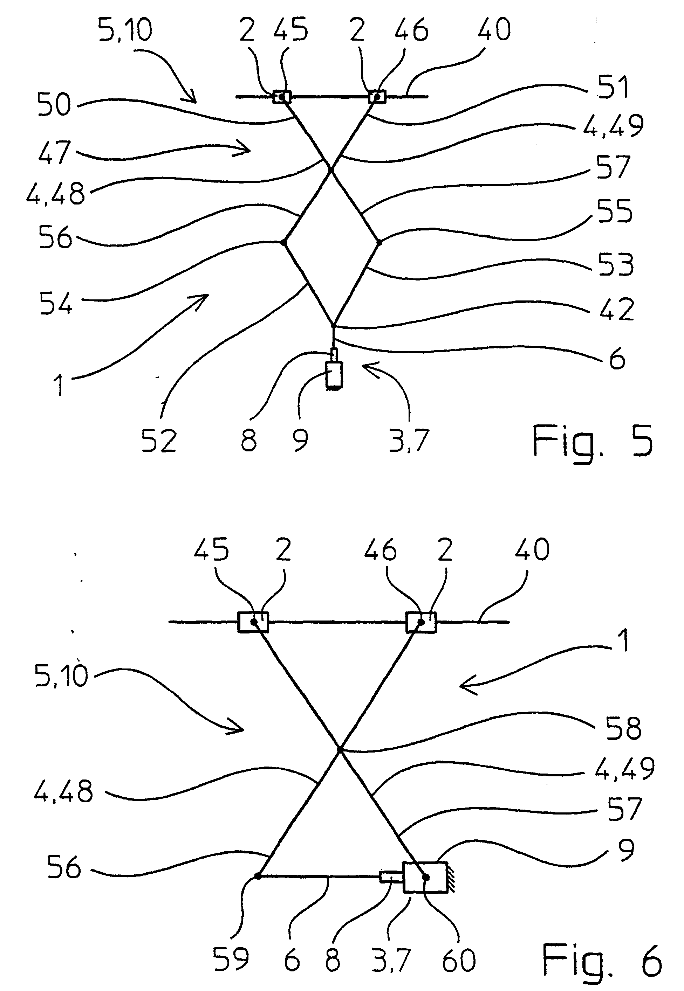

Beim Ausführungsbeispiel der Figur 5 enthält das Getriebe 5 eine Schere 47 mit zwei Scherenbecks 48, 49. Die entlang der Führung 40 verschiebbaren Bauteile 2 sind über Gelenke 45, 46 mit den Scherenspitzen 50, 51 verbunden. Das bewegliche Teil 8 wirkt über das Gelenk 42, die Streben 52, 53 und die Gelenke 54, 55 gegen die Scherenenden 56, 57. Die Gelenke 54, 55 sind zur Abänderung des Untersetzungsverhältnisses entlang der Scherenbecks 48, 49 verstellbar. Die Bewegungsrichtung des beweglichen Teils 8 verläuft senkrecht zur Verschiebungsrichtung der Führung 40.

Beim Ausführungsbeispiel der Figur 6 ist das bewegliche Teil 8 des elektromagnetischen Unearantriebs 7 parallel zur Führung 40 bewegbar. Das antreibende Teil 9 ist ortsveränderbar. Die Scherenbeckes 48, 49 sind über ein Gelenk 58 miteinander verbunden. Während ein Scherenende 56 über ein Gelenk 59 und eine Verbindung 6 mit dem beweglichen Teil 8 verbunden ist, ist das andere Scherenende 57 über ein Gelenk 60 mit dem antreibenden Teil 9 verbunden. Die Vorrichtung 1 ist insbesondere für kleine Verschiebungen der Bauteile 2 geeignet, da hierbei der Linearantrieb 7 nur in geringem Maße vertikal bewegt wird.
- 1: Vorrichtung
- 2: Bauteil
- 3: Antrieb
- 4: Verbindung
- 5: Getriebe
- 6: Verbindung
- 7: elektromagnetischer Unearantrieb
- 8: bewegliches Teil
- 9: antreibendes Teil
- 10: Untersetzungsgetriebe
- 11: Schweißbacke
- 13, 14: Befestigung
- 15: Gegenstand
- 16: Achse
- 17, 18: Scheibe
- 19, 20: Mantel
- 21: Mitnehmereinrichtung
- 22: gezahnte Fläche
- 23: umlaufende Fläche
- 24: Zahnstange
- 25, 26: Zahnrad
- 27, 28: Scheibe
- 29, 30: Riemen
- 31: Befestigung
- 32: Höhenverstellvorrichtung
- 40: Führung
- 41: Gelenkmechanismus
- 42: Gelenk
- 43, 44: Strebe
- 45, 46: Gelenk
- 47: Schere
- 48, 49: Scherenbeck
- 50, 51: Scherenspitze
- 52, 53: Strebe
- 54, 55: Gelenk
- 56, 57: Scherenende
- 58, 59, 60: Gelenk

## Patentansprüche

1. Vorrichtung zum gegenläufigen Bewegen von Schweißbacken (11, 12), bestehend aus einem Antrieb (13) und einem über jeweils eine Verbindung (4) mit einer Schweißbacke (11, 12) verbundenen oder verbindbaren Getriebe (15), und einer weiteren Verbindung (6) zwischen dem Getriebe (5) und dem Antrieb (3), wobei das Getriebe (5) ein Untersetzungsgetriebe (10), ist, **dadurch gekennzeichnet, daß** der Antrieb (3) ein elektromagnetischer Linearantrieb (7) mit einem beweglichen Teil (8) und einem antreibenden Teil (9) ist.

2. Vorrichtung nach Anspruch 1, **dadurch gekennzeichnet, daß** das antreibende Teil (9) relativ zum Bauteil (2) bzw. Gegenstand (15) ortsfest ist.

3. Vorrichtung nach Anspruch 1 oder Anspruch 2, **dadurch gekennzeichnet, daß** das Getriebe (5) zwei um die gleiche Achse (16) drehbare, starr miteinander verbundene Scheiben (17, 18) unterschiedlichen Durchmessers enthält, daß jede Scheibe (17, 18) entlang ihres Mantels (19, 20) eine Mitnehmereinrichtung (21) zum Mitnehmen einer zumindest tangential am Mantel (19, 20) anliegenden Verbindung (4, 6) aufweist, daß die Mitnehmereinrichtung (21) der Scheibe (18) mit dem größeren Durchmesser Kontakt mit der Verbindung (6) zum Antrieb (3), und die Mitnehmereinrichtung (21) der Scheibe (17) mit dem kleineren Durchmesser Kontakt mit der Verbindung (4) zum Bauteil (2) oder Gegenstand (15) hat.

4. Vorrichtung nach Anspruch 1 und Anspruch 2, **dadurch gekennzeichnet, daß** das bewegliche Teil (8) senkrecht zu einer Führung (40) bewegbar ist, daß entlang der Führung (40) ein Bauteil (2) verschiebbar ist, und daß das bewegliche Teil (8) über einen Gelenkmechanismus (41) mit dem Bauteil (2) verbunden ist.

5. Vorrichtung nach Anspruch 4, **dadurch gekennzeichnet, daß** der Gelenkmechanismus (41) mit der Führung (40) einen Winkel (β) von maximal 60 Grad in der Startposition bildet.

6. Vorrichtung nach Anspruch 3, **dadurch gekennzeichnet, daß** die Mitnehmereinrichtung (21) eine umlaufende Fläche (23) ist, daß achsparallel zu den Scheiben (17, 18) versetzt identisch zwei weitere, starr miteinander verbundene Scheiben (27, 28) vorgesehen sind, wobei ein Riemen (29) um die kleinen Scheiben (17, 27) und ein weiterer Riemen (30) um die größeren Scheiben (18, 28) umläuft.

7. Vorrichtung nach Anspruch 6, **dadurch gekennzeichnet, daß** die umlaufende Fläche (23) eine gezahnte Fläche (22) eines Zahnrades ist, und der Riemen ein Zahnriemen ist.

8. Vorrichtung nach Anspruch 1 oder Anspruch 2, **dadurch gekennzeichnet, daß** das Getriebe (5) eine Schere (47) mit zwei Scherenbecks (48, 49) enthält, wobei entlang einer Führung (40) verschiebbare Bauteile (2) über Gelenke (45, 46) mit den Scherenspitzen (50, 51) verbunden sind, und das bewegliche Teil (8) über Gelenke (42, 54, 55) gegen die Scherenenden (56, 57) wirkt.

9. Vorrichtung nach Anspruch 8, **dadurch gekennzeichnet, daß** das bewegliche Teil (8) senkrecht zur Führung (40) bewegbar ist, und daß das bewegliche Teil (8) über ein Gelenk (42) und jeweils eine Strebe (52, 53) mit den Scherenenden (56, 57) verbunden ist.

10. Vorrichtung nach Anspruch 8, **dadurch gekennzeichnet, daß** das bewegliche Teil (8) parallel zur Führung (40) bewegbar ist, daß die Scherenbecks (48, 49) in etwa mittig über ein Gelenk (58) miteinander verbunden sind, und daß ein Scherenende (57) über ein Gelenk (60) mit dem antreibenden Teil (9) verbunden ist.

11. Vorrichtung nach Anspruch 8, **dadurch gekennzeichnet, daß** mindestens ein Gelenk (54, 55) entlang eines Scherenbecks (48, 49) verstellbar ist.

12. Vorrichtung nach Anspruch 1 oder Anspruch 2, **dadurch gekennzeichnet, daß** als Bauteil (2) jeweils eine Schweißbacke (11, 12) über eine Befestigung (13, 14) mit dem Getriebe (5) verbunden ist.

13. Vorrichtung nach Anspruch 1, Anspruch 2 oder Anspruch 12, **dadurch gekennzeichnet, daß** die vorrichtung (1) in einer Höhenverstellvorrichtung (32) ausgeführt ist, wobei die Höhenverstellvorrichtung einen elektromagnetischen Linear-antrieb mit einem beweglichen Teil und einem antreibenden Teil und einem über eine Verbindung mit der Vorrichtung der Schweißbacken verbundenen Untersetzungsgetriebe sowie eine weitere Verbindung zwischen denn Getriebe und dem Antrieb der Höhenverstellvorrichtung aufweist.

## Claims

1. A device for moving welding jaws (11, 12) in opposite directions, comprising a drive (13) [*sic - recte* (3)] and a gearing (15) [*sic - recte* (5)] - which is connected or can be connected to a welding jaw (11, 12) by way of a respective connexion (4) - and a further connexion (6) between the gearing (5) and the drive (3), wherein the gearing (5) is a reduction gearing (10), **characterized in that** the drive (3) is an electromagnetic linear drive (7) with a movable part (8) and a driving part (9).

2. A device according to Claim 1, **characterized in that** the driving part (9) is stationary relative to the component (2) or article (15).

3. A device according to Claim 1 or Claim 2, **characterized in that** the gearing (5) comprises two discs (17, 18) of different diameter which are rotatable about the same axis (16) and are rigidly connected to each other, each disc (17, 18) is provided along its curved surface (19, 20) with an entrainment device (21) for entraining a connexion (4, 6) resting at least tangentially against the curved surface (19, 20), the entrainment device (21) of the disc (18) with the greater diameter is in contact with the connexion (6) to the drive (3), and the entrainment device (21) of the disc (17) with the smaller diameter is in contact with the connexion (4) to the component (2) or article (15).

4. A device according to Claim 1 and Claim 2, **characterized in that** the movable part (8) is movable at a right angle to a guide (40), a component (2) is displaceable along the guide (40), and the movable part (8) is connected to the component (2) by way of an articulation mechanism (41).

5. A device according to Claim 4, **characterized in that** the articulation mechanism (41) forms an angle (β) of a maximum of 60° with the guide (40) in the starting position.

6. A device according to Claim 3, **characterized in that** the entrainment device (21) is a continuous face (23), [and] two further discs (27, 28) rigidly connected to each other are provided offset axially parallel to the discs (17, 18) in an identical manner, wherein a belt (29) circulates around the small discs (17, 27) and a further belt (30) circulates around the larger discs (18, 28).

7. A device according to Claim 6, **characterized in that** the continuous face (23) is a toothed face (22) of a gearwheel, and the belt is a toothed belt.

8. A device according to Claim 1 or Claim 2, **characterized in that** the gearing (5) contains a scissors-type mechanism (47) with two scissor blades (48, 49), wherein components (2) displaceable along a guide (40) are connected to the scissor points (50, 51) by way of joints (45, 46), and the movable part (8) acts against the scissor ends (56, 57) by way of joints (42, 54, 55).

9. A device according to Claim 8, **characterized in that** the movable part (8) is movable at a right angle to the guide (40), and the movable part (8) is connected to the scissor ends (56, 57) by way of a joint (42) and one respective strut (52, 53) in each case.

10. A device according to Claim 8, **characterized in that** the movable part (8) is movable parallel to the guide (40), the scissor blades (48, 49) are connected to each other approximately centrally by way of a joint (58), and one scissor end (57) is connected to the driving part (9) by way of a joint (60).

11. A device according to Claim 8, **characterized in that** at least one joint (54, 55) is displaceable along a scissor blade (48, 49).

12. A device according to Claim 1 or Claim 2, **characterized in that** one respective welding jaw (11, 12) is connected as a component (2) to the gearing (5) by way of a fastening means (13, 14).

13. A device according to Claim 1, Claim 2 or Claim 12, **characterized in that** the device (1) is constructed in a vertical-displacement device (32), wherein the vertical-displacement device comprises an electromagnetic linear drive with a movable part and a driving part and a reduction gearing - connected to the device of the welding jaws by way of a connexion - as well as a further connexion between the gearing and the drive of the vertical-displacement device.

## Revendications

1. Dispositif pour déplacer en sens contraires des mâchoires de soudage (11, 12), constitué d'un dispositif d'entraînement (13) et d'une transmission (5) reliée ou pouvant être reliée, par une liaison (4) respective, à une mâchoire de soudage (11, 12), et d'une autre liaison (6) entre la transmission (5) et le dispositif d'entraînement (3), la transmission (5) étant un réducteur (10), **caractérisé en ce que** le dispositif d'entraînement (3) est un dispositif d'entraînement linéaire (7) électromagnétique avec une partie mobile (8) et une partie motrice (9).

2. Dispositif selon la revendication 1, **caractérisé en ce que** la partie motrice (9) est fixe par rapport au composant (2) ou à l'objet (15).

3. Dispositif selon la revendication 1 ou la revendication 2, **caractérisé en ce que** la transmission (5) contient deux disques (17, 18) de diamètres différents, reliés rigidement entre eux et pouvant tourner autour du même axe (16), **en ce que** chaque disque (17, 18) comporte le long de son enveloppe (19, 20) un dispositif entraîneur (21) pour entraîner une liaison (4, 6) s'appliquant au moins tangentiellement contre l'enveloppe (19, 20), **en ce que** le dispositif entraîneur (21) du disque (18) de plus grand diamètre est en contact avec la liaison (6) avec le dispositif d'entraînement (3), et le dispositif entraîneur (21) du disque (17) de plus petit diamètre est en contact avec la liaison (4) avec le composant (2) ou l'objet (15).

4. Dispositif selon la revendication 1 et la revendication 2, **caractérisé en ce que** la partie mobile (8) est déplaçable perpendiculairement à un guide (40), **en ce qu'**un composant (2) peut coulisser le long du guide (40) et **en ce que** la partie mobile (8) est reliée au composant (2) par un mécanisme d'articulation (41).

5. Dispositif selon la revendication 4, **caractérisé en ce que** le mécanisme d'articulation (41) forme avec le guide (40) un angle (β) de 60 degrés au maximum dans la position de démarrage.

6. Dispositif selon la revendication 3, **caractérisé en ce que** le dispositif entraîneur (21) est une surface (23) tournante, **en ce que** parallèlement à l'axe des disques (17, 18) sont prévus, décalés à l'identique, deux autres disques (27, 28) reliés rigidement entre eux, une courroie (29) passant autour des petits disques (17, 27) et une autre courroie (30) passant autour des grands disques (18, 28).

7. Dispositif selon la revendication 6, **caractérisé en ce que** la surface périphérique (23) est une surface dentée (22) d'une roue dentée, et la courroie est une courroie crantée.

8. Dispositif selon la revendication 1 ou la revendication 2, **caractérisé en ce que** la transmission (5) contient une tringlerie en ciseaux (47) avec deux branches (48, 49), des composants (2), qui peuvent coulisser le long d'un guide (40), étant reliés par des articulations (45, 46) aux extrémités (50, 51) des ciseaux, et la partie mobile (8) agissant, par des articulations (42, 54, 55), contre les extrémités (56, 57) des ciseaux.

9. Dispositif selon la revendication 8, **caractérisé en ce que** la partie mobile (8) est déplaçable perpendiculairement au guide (40), et **en ce que** la partie mobile (8) est reliée par une articulation (42) et par une entretoise (52, 53) à chacune des extrémités (56, 57) des ciseaux.

10. Dispositif selon la revendication 8, **caractérisé en ce que** la partie mobile (8) est déplaçable parallèlement au guide (40), et **en ce que** les branches (48, 49) des ciseaux sont reliées entre elles approximativement au milieu par une articulation (58), et **en ce que** l'une des extrémité (57) des ciseaux est reliée, par une articulation (60), à la partie motrice (9).

11. Dispositif selon la revendication 8, **caractérisé en ce qu'**au moins une articulation (54, 55) est déplaçable le long d'une branche (48, 49) des ciseaux.

12. Dispositif selon la revendication 1 ou la revendication 2, **caractérisé en ce qu'**une mâchoire de soudage (11, 12) est reliée, en tant que composant (2), à la transmission (5) par l'intermédiaire d'une fixation (13, 14).

13. Dispositif selon la revendication 1, la revendication 2 ou la revendication 12, **caractérisé en ce que** le dispositif (1) est réalisé dans un dispositif de réglage de la hauteur (32), le dispositif de réglage de la hauteur comportant un dispositif d'entraînement linéaire électromagnétique avec une partie mobile et une partie motrice et avec un réducteur relié, par une liaison, au dispositif des mâchoires de soudage, et comportant aussi une autre liaison entre la transmission et le dispositif d'entraînement du dispositif de réglage de la hauteur.
